# EUROPEAN PATENT SPECIFICATION

(11) **EP 4 306 257 B1**
(45) Date of publication and mention of the grant of the patent: **31.12.2025**
(21) Application number: 23181541.6
(22) Date of filing: 26.06.2023
(51) Int. Cl.: B23K 26/02, B23K 26/142, B23K 26/16, B23K 26/22, B23K 37/04, H01M 50/516, B23K 101/36

(54) **WELDING PRESS HEAD TOOL AND WELDING DEVICE**
SCHWEISSPRESSKOPFWERKZEUG UND SCHWEISSVORRICHTUNG
OUTIL DE TÊTE DE PRESSE À SOUDER ET DISPOSITIF DE SOUDAGE

(30) Priority: 13.07.2022 CN 202221791529 U
(43) Date of publication of application: 17.01.2024
(73) Proprietor: Contemporary Amperex Technology (Hong Kong) Limited, Central, Central And Western District (HK)
(72) Inventor: QUE, Tianxiang, Ningde, 352100 (CN); FAN, Xiang, Ningde, 352100 (CN); LIN, Gang, Ningde, 352100 (CN); XIE, Qingsong, Ningde, 352100 (CN)
(74) Representative: Gong, Jinping

(56) References cited:
- CN-A- 113 130 964
- CN-U- 216 938 956
- DE-A1- 102013 220 732
- DE-B3- 102014 117 871
- KR-A- 20210 128 720

## Description

### Technical Field

The present invention relates to the technical field of welding, and in particular to a welding press head tool as specified in any of claims 1-9 and a welding device as specified in any of claims 10-12.

### Background Art

During production and manufacturing of batteries, welding has been an important constituent part in a production process of products. With regard to a welding device in the related art, a component to be welded on a battery cell is generally fixed by means of a welding press head, and a welding operation is performed in a welding channel arranged on the welding press head. In a specific implementation, the welding press head may include a press plate and a press nozzle movably connected to one side of the press plate, and the press nozzle is capable of pressing the component to be welded on a clamp. However, during welding, high-temperature welding slag or the like generated in the welding channel may be splashed out through a gap between the press plate and the press nozzle, thereby affecting other non-welding parts on the battery cell and increasing the maintenance cost of the welding device.
CN 113 130 964 A describes a butterfly welding equipment.

### Summary

On this basis, it is necessary to provide a welding press head tool and a welding device for solving the problem that welding slag is likely to be splashed to the outside of a tool during welding of a welding press head tool in the related art. The invention is defined in the appended claims.

According to a first aspect of the present invention as defined by any of claims 1-9, provided is a welding press head tool, including at least one press head assembly. Each press head assembly includes:
a press plate provided with a first through hole penetrating the press plate in a first direction;
a press head movably connected to one side of the press plate in the first direction and capable of having a first gap with the press plate when the press head moves relative to the press plate, where the press head has a second through hole penetrating the press head in the first direction, and the first through hole and the second through hole are in communication to jointly define a welding channel for providing a welding space; and at least two groups of blocking assemblies arranged between the press plate and the press head, where each blocking assembly is used for blocking a channel formed by the first gap in a second direction perpendicular to the first direction, and at least two groups of blocking assemblies in all the blocking assemblies are arranged spaced apart in a radial direction of the welding channel and have overlapping portions in a circumferential direction of the welding channel.

There is the first gap between the press plate and the press head, such that the channel (hereinafter also referred to as an escape channel) for welding slag and laser light to escape is formed in the second direction perpendicular to the first direction, in other words, the welding slag in the welding channel is radially spread or splashed to the outside of the welding press head tool through the escape channel in the radial direction of the welding channel. In the above-described solution, the channel formed in the first gap in the second direction may be blocked by arranging at least two groups of blocking assemblies between the press plate and the press head. In addition, the at least two groups of blocking assemblies are arranged spaced apart in the radial direction of the welding channel and have the overlapping portions in the circumferential direction of the welding channel, and the overlapping portion in the circumferential direction enables this region in the circumferential direction to have at least two barriers to block the splashed welding slag, effectively preventing the welding slag from being splashed to other non-welding parts on a battery cell, and reducing the maintenance cost of a welding device.

According to the invention, each blocking assembly includes a blocking bar, and the blocking bar is arranged on one of the press plate and the press head and extends out toward the other. By arranging the strip-shaped blocking bars, on the one hand, machining is facilitated, and on the other hand, the blocking bars can block the escape channel formed in the first gap in a length direction thereof and have a good blocking effect.

According to the invention, among the blocking assemblies arranged spaced apart in the radial direction of the welding channel and having the overlapping portions in the circumferential direction of the welding channel, at least one group of blocking assemblies is located at an outer contour edge of the press head, and at least one group of blocking assemblies is located between the outer contour edge of the press head and an orifice edge of the second through hole.

According to arrangement positions of the blocking assemblies, at least one group of blocking assemblies is located at the outer contour edge of the press head, and can block the splashed welding slag at an outermost side of the press head, and can also prevent dust and the like outside the welding press head from entering the welding press head; and at least one group of blocking assemblies is located between the outer contour edge of the press head and the orifice edge of the second through hole, and can form two blocking lines for the first gap, so that the blocking effect on the welding slag is better.

In one of embodiments, the blocking assemblies further includes an insert groove arranged corresponding to the blocking bar and used for inserting the blocking bar; and the blocking bar is arranged on one of the press plate and the press head, and the insert groove is formed in the other of the press plate and the press head.

By arranging the insert groove capable of accommodating the blocking bar, when the press head and the press plate are close to each other, an inserted bar on the press head can extend into the corresponding insert groove; on the one hand, surfaces of the press head and the press plate that are opposite to each other can continue to be close to each other, avoiding the phenomenon that the press head cannot continue to move due to the arrangement of the blocking bar; on the other hand, the at least two groups of blocking bars cooperate with the insert grooves to form a structure similar to a labyrinth seal, so that a path for the welding slag or dust to pass in and out of the welding channel becomes longer, and the blocking effect is better.

In one of the embodiments, in the same blocking assemblies, the blocking bar is arranged on the surface of the press head facing the press plate, and the insert groove is formed in the surface of the press plate facing the press head.

During the use of the welding press head, the press plate needs to be connected to a rack of a welding apparatus, and the press head is movably connected to the press plate, making maintenance and replacement of the press head easier compared with the press plate. If the blocking bar structure is damaged or needs to be maintained or replaced in other cases, it is easier to arrange the blocking bar structure on the press head.

In one of the embodiments, in the blocking assembly located at the outer contour edge of the press head, an extension end of the blocking bar is provided with a hooking portion, and a limiting portion is arranged at a rabbet of the insert groove corresponding to the hooking portion; and the hooking portion extends into the insert groove, and the hooking portion is used for being hooked on the limiting portion when the blocking bar moves away from the insert groove. By means of the cooperation of the hooking portion and the limiting portion, a deviation movement of the press head relative to the press plate can be limited, that is to say, the phenomenon can be avoided that the press head disengages from the press plate, causing the blocking assembly to be incapable of blocking the first gap.

In one of the embodiments, among the blocking assemblies arranged spaced apart in the radial direction of the welding channel and having the overlapping portions in the circumferential direction of the welding channel, at least one group of blocking assemblies is located at the orifice edge of the second through hole. The blocking assembly being located at the orifice edge of the second through hole actually means that the welding slag is blocked at a juncture of the first gap and the second through hole, effectively preventing the welding slag from entering the first gap.

In one of the embodiments, in the blocking assembly located at the orifice edge of the second through hole, a blocking bar is arranged on the press head and extends out to an inner side of an inner wall of the first through hole. In this way, the blocking bar is capable of better blocking the first gap.

In one of the embodiments, a first recess and a second recess are respectively formed in the surfaces of the press plate and the press head opposite to each other, the first recess is in communication with the first through hole, the second recess is in communication with the second through hole, the first recess and the second recess correspond to each other in position and jointly define a dust removal channel in communication with the outside of the press head assembly, and in the blocking assembly located at the orifice edge of the second through hole, part of a structure of the blocking bar extends into an inner side of an inner wall of the first recess and extends in an axial direction of the dust removal channel.

In the above-described solution, one end of the dust removal channel is in communication with the welding channel, and the other end may be connected to a negative pressure apparatus, such that the welding slag generated in the welding channel can be removed through the dust removal channel. The dust removal channel is formed by combining the first recess and the second recess, and the blocking bar in the blocking assembly extends into the inner side of the inner wall of the first recess and extends in the axial direction of the dust removal channel, so that the blocking bar can better block the first gap.

In one of the embodiments, a third recess and a fourth recess are respectively formed in the surfaces of the press plate and the press head opposite to each other, the third recess is in communication with the first through hole, the fourth recess is in communication with the second through hole, the third recess and the fourth recess correspond to each other in position and jointly define a gas intake channel in communication with the outside of the press head assembly, and in the blocking assembly located at the orifice edge of the second through hole, the blocking bar extends into an inner side of an inner wall of the third recess and extends in an axial direction of the gas intake channel. In this way, the blocking bar is capable of better blocking the first gap.

In one of the embodiments, six groups of blocking assemblies are provided, where three groups of blocking assemblies are located on a first side of the welding channel, are arranged spaced apart in the radial direction of the welding channel, and have overlapping portions in the circumferential direction of the welding channel; the other three groups of blocking assemblies are located on a second side of the welding channel, are arranged spaced apart in the radial direction of the welding channel, and have overlapping portions in the circumferential direction of the welding channel; where the first side and the second side are opposite sides of the welding channel in the radial direction thereof. As described above, the welding slag is blocked and covered at the two opposite sides of the welding channel, so that the welding slag can be prevented from being splashed out of the welding channel from two directions of the opposite sides of the welding channel.

In one of the embodiments, the blocking bars in each blocking assembly extend in the second direction; where the second direction is perpendicular to a direction from the first side to the second side and perpendicular to the first direction. In this way, the entire first gap can be blocked and covered as much as possible.

In one of the embodiments, at least two groups of press head assemblies are provided, and the press plates in the at least two groups of press head assemblies are interconnected or integrally formed; and the press heads in the at least two groups of press head assemblies are located on the same side of the corresponding press plates and are arranged spaced apart from each other. By interconnecting or integrally forming the press plates in at least two groups of press head assemblies as described above, the structure of the welding press head tool can be more compact.

In one of the embodiments, the press head assembly further includes a connecting rod, the connecting rod is movably connected to the press plate in the first direction, and an end portion of the connecting rod facing the press head is detachably connected to the press head. The press head is connected to the connecting rod, and the connecting rod is movably connected to the press plate, such that when the connecting rod moves relative to the press plate, the press head can be driven to move relative to the press plate.

According to a second aspect of the present application, provided is a welding device according to any of claims 10-12, the welding device including a welding press head tool of the foregoing embodiment.

In one of the embodiments, the welding device further includes: a rack to which a welding press head tool is connected; a clamp that is used for clamping and fixing a component to be welded and is arranged opposite to the welding press head tool; a jacking mechanism that is arranged on the rack, is connected to the clamp and is used for driving the component to be welded on the clamp to move in an opposite direction of the welding press head tool and the clamp; and a limiting mechanism that is arranged on the rack, is used for limiting, when the clamp is located in a first preset position relative to the welding press head tool, a displacement of the clamp toward the welding press head tool.

In the above-described solution, a lower reference position of a welding operation is limited by arranging a limiting mechanism, so as to eliminate the instability of such a clamping force. Specifically, the limiting mechanism is used for limiting, when the clamp is located in the first preset position relative to the welding press head tool, the displacement of the clamp toward the welding press head tool, namely, the jacking mechanism can drive the clamp to reach the same position each time, in other words, during welding each time, the component to be welded on the welding clamp can be located in the same position in a height direction. In this way, the component to be welded has the same position lower reference in different welding processes, so that the problem can be solved that the clamping force is unstable due to fluctuations in the relative positions of the welding press head and the clamp, and the welding quality is improved.

In one of the embodiments, the limiting mechanism includes a moving member and a limiting baffle, and the moving member is connected to the clamp; the limiting baffle is connected to the rack, and the limiting baffle is located on a movement path of the moving member; and when the moving member moves to abut against the limiting baffle under the drive of the clamp, the clamp is located in the first preset position relative to the welding press head tool. In the above-described solution, the moving member can be in linkage with the clamp, and a position of the moving member is limited by means of the limiting baffle, so that the position of the clamp is limited. The structure is simple and easy to operate.

In one of the embodiments, the press plate and the press head are movably connected by means of the connecting rod, an elastic member is arranged between the press plate and the press head, and the elastic member is used for applying to the press head an elastic force facing away from the press plate; and the first gap between the press plate and the press head is greater than or equal to 2 mm. Thus, the elastic member is enabled to offset a dimensional chain tolerance of the component to be welded. Even for different tolerances of components to be welded, the components to be welded can also be subjected to the same pressure.

In one of the embodiments, the elastic member has an elastic coefficient of 5.6 N/mm. Thus, a pressing force of the welding press head tool acting on the component to be welded is less than or equal to 150 N.

### Brief Description of the Drawings

Fig. 1 is a schematic structural diagram of a welding press head tool according to an embodiment of the present application;
Fig. 2 is a schematic exploded structural diagram of a welding press head tool according to an embodiment of the present application;
Fig. 3 is a schematic structural diagram, from another perspective, of the welding press head tool according to an embodiment of the present application;
Fig. 4 is a partially enlarged view of part A in Fig. 3;
Fig. 5 is a top view of a press head in a welding press head tool according to an embodiment of the present application;
Fig. 6 is a schematic exploded structural diagram, from another perspective, of the welding press head tool according to an embodiment of the present application;
Fig. 7 is a cross-sectional view of a welding press head tool according to an embodiment of the present application;
Fig. 8 is a schematic structural diagram of a welding device according to an embodiment of the present application; and
Fig. 9 is a schematic diagram of an operating principle of a welding device according to an embodiment of the present application.

List of reference numerals:
100. Press head assembly; 101. First gap; 110. Press plate; 111. Guide hole; 1111. Counter bored hole; 120. First through hole; 130. Press head; 140. Connecting rod; 141. Elastic member; 150. Second through hole; 151. Orifice edge of second through hole;
160. Blocking assembly; 160a. First blocking assembly; 160b. Second blocking assembly; 160c. Third blocking assembly; 161. Blocking bar; 1611. Hooking portion; 162. Insert groove; 1621. Limiting portion;
170. Welding channel; 180. Dust removal channel; 181. First recess; 182. Second recess; 190. Gas intake channel; 191. Third recess; 192. Fourth recess;
200. Welding press head tool;
300. Welding device; 310. Rack; 311. Limiting baffle; 320. Clamp; 330. Component to be welded; 340. Jacking mechanism; 350. Limiting mechanism; 351. Moving member.

### Detailed Description of Embodiments

In order to make the above objectives, features and advantages of the present application more clearly understood, particular embodiments of the present application will be described in detail below with reference to the accompanying drawings. In the following description, numerous specific details are set forth in order to provide a thorough understanding of the present application. However, the present application can be implemented in many other ways different from those described herein, and those skilled in the art can make similar improvements without departing from the scope of the invention as defined by the claims. Therefore, the present application is not limited by the particular embodiments disclosed below.

In the description of the present application, it should be understood that the orientation or positional relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential", etc. are based on the orientation or positional relationships shown in the accompanying drawings and are merely for ease of description of the present application and simplification of the description, rather than indicating or implying that the devices or elements referred to must have a specific orientation or be constructed and operated in a described orientation, and therefore cannot be construed as limiting the present application.

In addition, the terms "first" and "second" are used for descriptive purposes only, and cannot be construed as indicating or implying relative importance or implicitly indicating the number of technical features indicated. Therefore, the features defined with "first" and "second" may explicitly or implicitly include at least one of the features. In the description of the present application, the meaning of "a plurality of" is at least two, such as two, three and so on, unless otherwise specifically defined.

In the present application, unless expressly stated or limited otherwise, the terms such as "mounting", "connection", "connected" and "fixing" should be interpreted broadly, for example, either fixed or detachable connection, or integration; or may be a mechanical connection or an electrical connection; or may be a direct connection or an indirect connection through an intermediate medium, or may be communication between interiors of two elements or interaction between two elements, unless it may be clearly defined otherwise. For those of ordinary skills in the art, the specific meaning of the foregoing terms in the present application may be understood according to specific circumstances.

In the present application, unless otherwise explicitly specified and defined, the expression of a first feature being "on" or "under" a second feature may be the case that the first feature is in direct contact with the second feature, or the first feature is in indirect contact with the second feature via an intermediate medium. Furthermore, the expression of the first feature being "over", "above" and "on top of" the second feature may be the case that the first feature is directly above or obliquely above the second feature, or only means that the level of the first feature is higher than the second feature. The expression of the first feature being "underneath", "below" and "beneath" the second feature may be the case that the first feature is directly below or obliquely below the second feature, or only means that the level of the first feature is less than the second feature.

It should be noted that when an element is referred to as being "fixed to" or "arranged on" another element, it may be directly on the other element or an intervening element may be present. When an element is referred to as being "connected" to another element, it may be directly connected to the other element or an intervening element may be present. The terms "vertical", "horizontal", "upper", "lower", "left", "right" and similar expressions used herein are for the purpose of illustration only and do not represent any unique embodiment.

During production and manufacturing of batteries, welding has been an important constituent part in a production process of products. With regard to a welding device in the related art, a component to be welded on a battery cell is generally fixed by means of a welding press head, and a welding operation is performed in a welding channel arranged on the welding press head.

In a specific implementation, the welding press head may include a press plate and a press nozzle movably connected to one side of the press plate, and the press nozzle is capable of pressing the component to be welded on a clamp. During welding, high-temperature welding slag or the like generated in the welding channel may be typically splashed out of the welding channel, thereby affecting other non-welding parts on the battery cell and increasing the maintenance cost of the welding device.

The applicant of the present application found after research that in the welding press head of the related art, the phenomenon often occurs that the high-temperature welding slag in the welding channel is splashed out from the press plate and the press nozzle of the welding press head, because a certain gap is generally reserved between the press plate and the press nozzle; when the welding device is a laser welding device, not only the welding slag is splashed, but also laser light harmful to the human body is leaked out from the gap, affecting other non-welding parts of the battery cell, and also seriously affecting personal safety of an operator.

In order to solve the problem of welding slag splashing during the use of the conventional welding press head, the applicant of the present application designed, after an intensive research, a welding press head tool and a welding device, where two or more groups of blocking assemblies are arranged in a gap between a press plate and a press head, and at least part of a region has two or more blocking barriers in a slag flyout direction (or a laser radiation direction), so that a blocking effect on the welding slag is better.

The welding devices to which the welding press head tool disclosed in the embodiments of the present application is applied include, but are not limited to, various types of welding devices such as laser welding devices, ultrasonic welding devices, resistance welding devices, high-frequency induction welding devices, etc. A variety of components to be welded may also be welded, for example, welding of a busbar and a post, welding of an adapter piece and a post, etc.

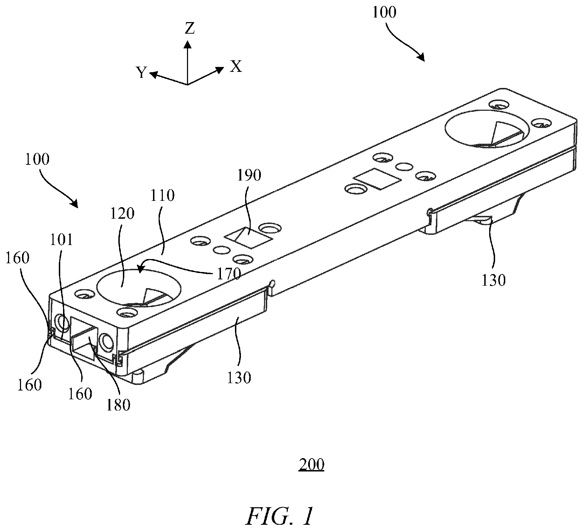

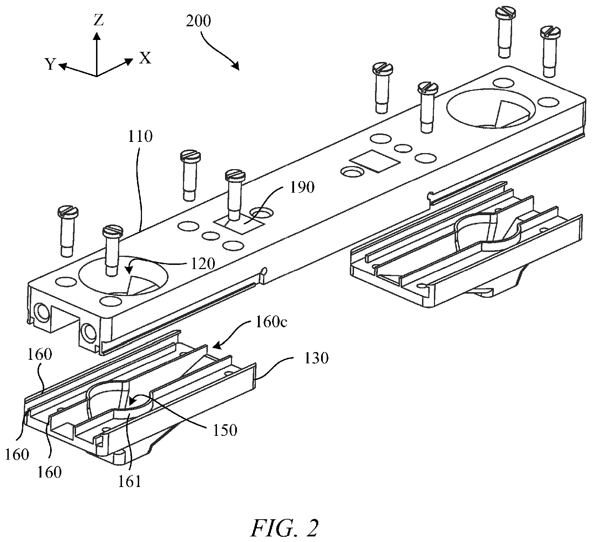

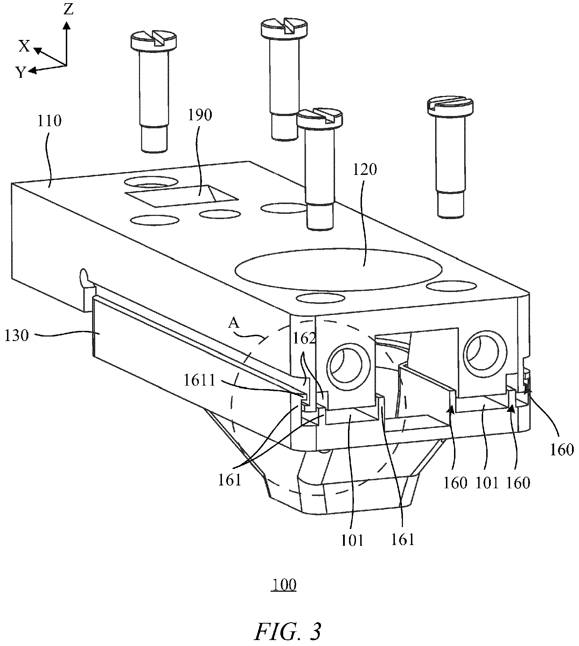

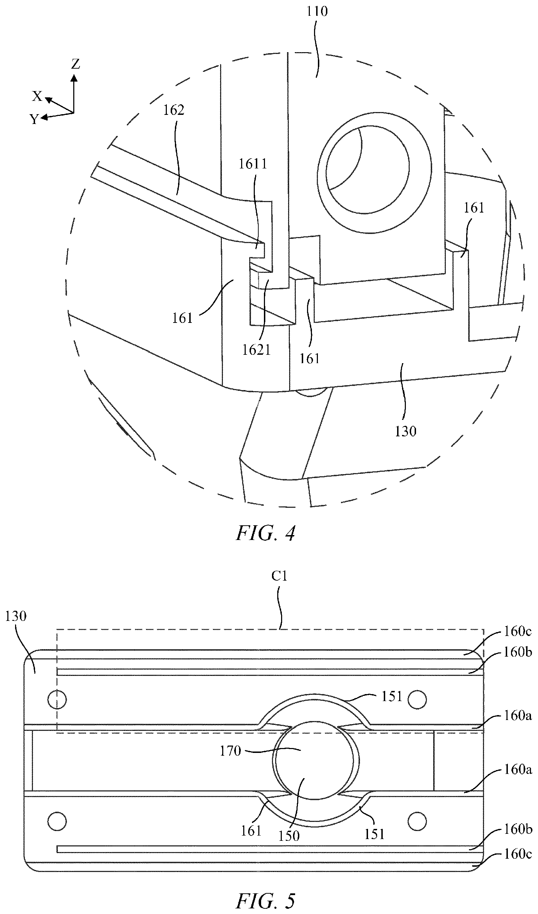

Fig. 1 is a schematic structural diagram of a welding press head tool according to an embodiment of the present application. Fig. 2 is a schematic exploded structural diagram of a welding press head tool according to an embodiment of the present application. Fig. 3 is a schematic structural diagram, from another perspective, of a welding press head tool according to an embodiment of the present application. Fig. 4 is a partially enlarged view of part A of Fig. 3. Fig. 5 is a top view of a press head in a welding press head tool according to an embodiment of the present application.

Referring to Figs. 1 and 2, an embodiment of the present application provides a welding press head tool 200, including at least one press head assembly 100. Each press head assembly 100 includes:
a press plate 110 provided with a first through hole 120 penetrating the press plate 110 in a first direction;
a press head 130 movably connected to one side of the press plate 110 in the first direction Z and capable of having a first gap 101 with the press plate 110 when the press head moves relative to the press plate 110, where the press head 130 has a second through hole 150 penetrating the press head 130 in the first direction Z, and the first through hole 120 and the second through hole 150 are in communication to jointly define a welding channel 170 for providing a welding space; and
at least two groups of blocking assemblies 160 arranged between the press plate 110 and the press head 130, where each blocking assembly 160 is used for blocking a channel formed by the first gap 101 in a second direction perpendicular to the first direction Z, and at least two groups of blocking assemblies 160 in all the blocking assemblies 160 are arranged spaced apart in a radial direction of the welding channel 170, and have overlapping portions in a circumferential direction of the welding channel 170.

There is the first gap 101 between the press plate 110 and the press head 130, such that the channel (hereinafter also referred to as an escape channel) for welding slag and laser light to escape is formed in the first gap 101 in the second direction perpendicular to the first direction Z, in other words, the welding slag in the welding channel 170 is radially spread or splashed to the outside of the welding press head tool 200 through the escape channel in the radial direction of the welding channel 170. In the above-described solution, the channel formed in the first gap 101 in the second direction may be blocked by arranging at least two groups of blocking assemblies 160 between the press plate 110 and the press head 130. In addition, the at least two groups of blocking assemblies 160 are arranged spaced apart in the radial direction of the welding channel 170 and have the overlapping portions in the circumferential direction of the welding channel 170, in other words, the at least two groups of blocking assemblies 160 are arranged spaced apart on the same side of the welding channel 170 in the radial direction, and the overlapping portion in the peripheral direction enables this region in the peripheral direction to have at least two barriers to block the splashed welding slag, effectively preventing the welding slag from being splashed to other non-welding parts on the battery cell, and reducing the maintenance cost of a welding device.

It can be understood that one or more press head assemblies 100 may be included in the welding press head tool 200. In the present application, two press head assemblies 100 being included in the welding press head tool 200 are described as an example, and the number of the press head assemblies 100 is similar in other cases, which will not be described in detail herein.

The press plate 110 may be connected to a rack of a welding device and be fixed relative to the rack. The press plate 110 is provided with a first through hole 120 penetrating the press plate 110 in the first direction Z, namely, the axial direction of the first through hole 120 is in the first direction Z.

In the embodiment of the present application, for convenience of explanation, the axial direction of the welding channel 170, namely, the axial direction of the first through hole 120, may be defined as the first direction Z, a direction X and a direction Y perpendicular to the first direction may be defined, and every two of the direction X, the direction Y and the first direction Z may be perpendicular to each other. The channel for the welding slag and the laser light to escape is formed in the first gap 101 in the second direction perpendicular to the first direction Z, where the second direction refers to any one direction in an XY plane. Thus, the escape channel is formed in the part of the region of the first gap 101 in the circumferential direction of the second through hole.

At least two groups of blocking assemblies 160 are arranged spaced apart on the same side of the radial direction of the welding channel 170, which means that at least two groups of blocking assemblies 160 are located on the same side of the welding channel 170 in a radius direction such that two or more blocking barriers are formed on the same side of the welding channel 170.

The press plate 110 and the press head 130 are movably connected to each other, which means that the relative positions of the press plate 110 and the press head 130 can be adjusted. The press head 130 is located on a side of the press plate 110 in the first direction Z, and when the press plate 110 moves relative to the press head 130, the first gap 101 is formed between the press plate 110 and the press head 130, and the first gap 101 becomes a channel for splashing the welding slag.

The blocking assemblies 160 may be arranged on the press plate 110 and/or the press head 130 to block the escape channel in the first gap 101.

In conjunction with Figs. 2 and 5, at least two groups of blocking assemblies 160 are arranged spaced apart on the same side of the welding channel 170 in the radial direction and have the overlapping portions in the circumferential direction of the welding channel 170. Specifically, at least two groups of blocking assemblies 160 are arranged at different positions on the radial side of the welding channel 170, and at least two, or three, or more groups of blocking assemblies 160 should have overlapping portions in the circumferential direction of the welding channel 170.

For ease of illustration, the three groups of blocking assemblies 160 viewed from the upper side of a plane in Fig. 5 are respectively defined as first blocking assemblies 160a, second blocking assemblies 160b, and third blocking assemblies 160c. Illustratively, the first blocking assemblies 160a, the second blocking assemblies 160b, and the third blocking assemblies 160c are located at different positions in the radial direction of the welding channel 170, and the first blocking assemblies 160a, the second blocking assemblies 160b, and the third blocking assemblies 160c have overlapping regions C1 in the circumferential direction of the welding channel 170.

It can be understood that the embodiments of the present application are not limited thereto, it is also possible that only the second blocking assemblies 160b and the third blocking assemblies 160c have overlapping regions in the circumferential direction of the welding channel 170, or only the first blocking assemblies 160a and the second blocking assemblies 160b have overlapping regions in the circumferential direction of the welding channel 170, or only the first blocking assemblies 160a and the third blocking assemblies 160c have overlapping regions in the circumferential direction of the welding channel 170.

In some embodiments of the present application, referring to Figs. 3 and 4, each blocking assembly 160 includes a blocking bar 161, and the blocking bar 161 is arranged on one of the press plate 110 and the press head 130 and extends out toward the other.

By arranging the strip-shaped blocking bars 161, on the one hand, machining is facilitated, and on the other hand, the blocking bars 161 can block the first gap 101 in the length direction thereof and have a good blocking effect. In the present application, the blocking bar 161 being arranged on the press head 130 is taken as an example for the following description, and is similar to the case where the blocking bar 161 is arranged on the press plate 110, which will not be described in detail herein.

In some embodiments of the present application, among the blocking assemblies 160 arranged spaced apart in the radial direction of the welding channel 170 and having the overlapping portions in the circumferential direction of the welding channel 170, at least one group of blocking assemblies 160 is located at an outer contour edge of the press head 130, and at least one group of blocking assemblies 160 is located between the outer contour edge of the press head 130 and an orifice edge 151 of the second through hole.

With regard to arrangement positions of the blocking assemblies 160, at least one group of blocking assemblies 160 is located at the outer contour edge of the press head 130, and can block the splashed welding slag at an outermost side of the press head 130, and can also prevent dust and the like outside the welding press head 130 from entering the welding press head 130; and at least one group of blocking assemblies 160 is located between the outer contour edge of the press head 130 and the orifice edge 151 of the second through hole, and can form two blocking lines for the first gap 101, so that the blocking effect on the welding slag is better.

Referring specifically to Fig. 5, the third blocking assemblies 160c are located at the outer contour edge of the press head 130, and the second blocking assemblies 160b are located between the outer contour edge of the press head 130 and the orifice edge 151 of the second through hole 150. In some other examples, the first blocking assemblies 160a are located at the orifice edge 151 of the second through hole 150.

With continued reference to Figs. 3 and 4, in some embodiments of the present application, the blocking assembly 160 further includes an insert groove 162 corresponding to the blocking bar 161 and used for inserting the blocking bar 161; and the blocking bar 161 is arranged on one of the press plate 110 and the press head 130, and the insert groove 162 is formed in the other of the press plate 110 and the press head 130.

By arranging the insert grooves 162 capable of accommodating the blocking bars 161, when the press head 130 and the press plate 110 are close to each other, the blocking bars 161 on the press head 130 can extend into the corresponding insert grooves 162, such that on the one hand, the opposite surfaces of the press head 130 and the press plate 110 can continue to be close to each other, avoiding the phenomenon that the press head 130 cannot continue to move due to the arrangement of the blocking bars 161; on the other hand, the at least two groups of blocking bars 161 cooperate with the insert grooves 162 to form a structure similar to a labyrinth seal, so that a path for the welding slag or dust to pass in and out of the first gap 101 becomes longer, and the blocking effect is better.

In a specific implementation, when the blocking bar 161 is arranged on the press plate 110, the insert groove 162 is formed in the press head 130; and when the blocking bar 161 is arranged on the press head 130, the insert groove 162 is formed in the press plate 110.

In some embodiments of the present application, the description is provided by taking an example that in the same blocking assembly 160, the blocking bar 161 is arranged on the surface of the press head 130 facing the press plate 110, and the insert groove 162 is formed in the surface of the press plate 110 facing the press head 130. With regard to the case where the insert groove 162 is formed in the surface of the press head 130 facing the press plate 110, and the blocking bar 161 is arranged on the surface of the press plate 110 facing the press head 130, details are not described herein again.

It can be understood that during use of the welding press head 130, the press plate 110 needs to be connected to the rack of the welding device, and the press head 130 is movably connected to the press plate 110, making maintenance and replacement of the press head 130 easier compared with the press plate 110. If the blocking bar 161 structure is damaged or needs to be maintained or replaced in other cases, it is easier to arrange the blocking bar 161 structure on the press head 130.

In some embodiments of the present application, referring to Fig. 4, in a blocking assembly 160 located at the outer contour edge of the press head 130, a hooking portion 1611 is arranged at an extension end of the blocking bar 161, and a limiting portion 1621 is arranged at a rabbet of the insert groove 162 corresponding to the hooking portion 1611; and the hooking portion 1611 extends into the insert groove 162, and the hooking portion 1611 is used for being hooked on the limiting portion 1621 when the blocking bar moves away from the insert groove 162. In this case, by means of the cooperation of the hooking portion 1611 and the limiting portion 1621, a deviation movement of the press head 130 relative to the press plate 110 can be limited, that is to say, the phenomenon can be avoided that the press head 130 disengages from the press plate 110, causing the blocking assembly 160 to be incapable of blocking the first gap 101.

In a specific implementation, the hooking portion 1611 may be configured as a protrusion formed at the extension end of the blocking bar 161, and the limiting portion 1621 may be configured as a protrusion extending out from the rabbet of the insert groove 162 toward the blocking bar 161. Thus, when the blocking bar 161 moves relative to the insert groove 162 in a direction away from the insert groove 162, namely, in the first direction Z, the hooking portion 1611 and the limiting portion 1621 are limited and engage with each other to prevent the blocking bar 161 from moving away from the insert groove 162.

In some embodiments of the present application, as described above, among the blocking assemblies 160 arranged spaced apart in the radial direction of the welding channel 170 and having the overlapping portions in the circumferential direction of the welding channel 170, at least one group of blocking assemblies 160 is located at the orifice edge 151 of the second through hole. Specifically, the blocking assembly 160 being located at the orifice edge 151 of the second through hole actually means that the welding slag is blocked at a juncture of the first gap 101 and the second through hole 150, effectively preventing the welding slag from entering the first gap 101.

In specific implementations, referring to Figs. 4 and 5, the blocking bar 161 in the first blocking assembly 160a may extend along the orifice edge 151 of the second through hole, so that the blocking effect on the welding slag is better.

In some embodiments of the present application, in the blocking assembly 160 located at the orifice edge 151 of the second through hole, the blocking bar 161 is arranged on the press head 130 and extends out to an inner side of an inner wall of the first through hole 120. Thus, the blocking bar 161 is capable of better blocking the first gap 101.

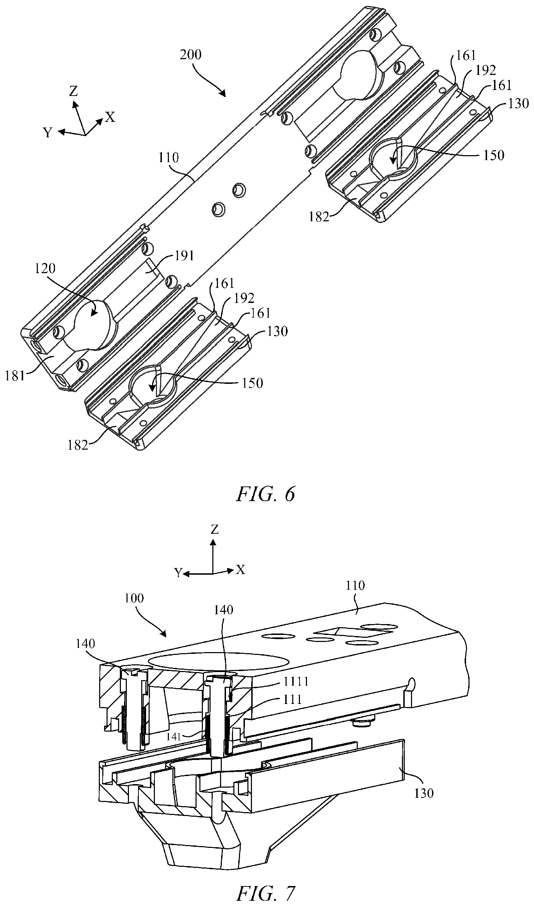

Fig. 6 is a schematic exploded structural diagram, from another perspective, of the welding press head tool 200 according to an embodiment of the present application. It should be noted that for ease of observation, the press plate 110 in Fig. 6 is shown after being rotated at an angle about the X direction.

Referring to Figs. 1, 4 and 6, in some embodiments of the present application, a first recess 181 and a second recess 182 are respectively formed in the surfaces of the press plate 110 and the press head 130 opposite to each other, the first recess 181 is in communication with the first through hole 120, the second recess 182 is in communication with the second through hole 150, the first recess 181 and the second recess 182 correspond to each other in position and jointly define a dust removal channel 180 in communication with the outside of the press head assembly 100, and in the blocking assembly 160 located at the orifice edge 151 of the second through hole, part of the structure of the blocking bar 161 extends into an inner side of an inner wall of the first recess 181 and extends in an axial direction of the dust removal channel 180. In the above-described solution, one end of the dust removal channel 180 is in communication with the welding channel 170, and the other end may be connected to a negative pressure apparatus, such that the welding slag generated in the welding channel 170 can be removed through the dust removal channel 180. The dust removal channel 180 is formed by combining the first recess 181 and the second recess 182, and the blocking bar 161 in the blocking assembly 160 extends into the inner side of the inner wall of the first recess 181 and extends in the axial direction of the dust removal channel 180, so that the blocking bar 161 can better block the first gap 101.

Further, the blocking bar 161 may be continuously arranged at an edge of an opening of the second recess 182.

In some embodiments of the present application, with continued reference to Figs. 1 and 6, a third recess 191 and a fourth recess 192 are respectively formed in the surfaces of the press plate 110 and the press head 130 opposite to each other, the third recess 191 is in communication with the first through hole 120, the fourth recess 192 is in communication with the second through hole 150, the third recess 191 and the fourth recess 192 correspond to each other in position and jointly define a gas intake channel 190 in communication with the outside of the press head assembly 100, and in the blocking assembly 160 located at the orifice edge 151 of the second through hole, the blocking bar 161 extends into the inner side of the inner wall of the first through hole 120 and extends in the axial direction of the gas intake channel 190.

One end of the gas intake channel 190 is in communication with a protective gas source, the other end is in communication with the welding channel 170, and the gas intake channel 190 is used for introducing a protective gas into the welding channel 170 during the welding, so as to prevent oxidation of a component to be welded during the welding. Similar to that described above, the gas intake channel 190 is formed by combining the third recess 191 and the fourth recess 192, and the blocking bar 161 in the blocking assembly 160 extends into an inner side of an inner wall of the third recess 191 and extends in the axial direction of the gas intake channel 190, so that the blocking bar 161 can better block the first gap 101.

Further, the blocking bar 161 may be continuously arranged at an edge of an opening of the fourth recess 192.

In an embodiment of the present application, it is also possible to make axial directions of the dust removal channel 180 and the gas intake channel 190 co-planar, namely, the dust removal channel 180 and the gas intake channel 190 are arranged opposite to each other.

In some embodiments of the present application, six groups of blocking assemblies 160 may be provided, where three groups of blocking assemblies 160 are located on a first side of the welding channel 170, are arranged spaced apart in the radial direction of the welding channel 170, and have overlapping portions in the circumferential direction of the welding channel 170;
the other three groups of blocking assemblies 160 are located on a second side of the welding channel 170, are arranged spaced apart in the radial direction of the welding channel 170, and have overlapping portions in the circumferential direction of the welding channel 170;
where the first side and the second side are opposite sides of the welding channel 170 in the radial direction thereof. As described above, the welding slag is blocked at two opposite sides of the welding channel 170, so that the welding slag can be prevented from being splashed out of the welding channel 170 from two directions of the opposite sides of the welding channel 170.

In addition, the direction Y from the first side to the second side may be perpendicular to the opposite direction X of the gas intake channel 190 and the dust removal channel 180. Thus, the welding slag is blocked by the blocking bar 161 in the direction Y from the first side to the second side, and in the direction X perpendicular to the direction from the first side to the second side, there is no risk of slag splashing due to the presence of the gas intake channel 190 and the dust removal channel 180. This is because in the gas intake channel 190, the protective gas source is introduced into the welding channel 170, and an airflow is blown into the welding channel 170, so there is no fear that the welding slag will fly out from the gas intake channel 190; and in the dust removal channel 180, the welding slag is sucked from the welding channel 170 to the dust removal channel 180 due to the presence of a negative pressure.

In some embodiments of the present application, the blocking bars 161 in each blocking assembly 160 extend in the second direction; where the second direction is perpendicular to the direction Y from the first side to the second side and perpendicular to the first direction Z. In this way, the entire first gap 101 can be blocked as much as possible.

In addition, as described above, in some embodiments of the present application, at least two groups of press head assemblies 100 are provided, and the press plates 110 in the at least two groups of press head assemblies 100 are interconnected or integrally formed; and
the press heads 130 in the at least two groups of press head assemblies 100 are located on the same side of the corresponding press plates 110 and are arranged spaced apart from each other. By interconnecting or integrally forming the press plates 110 in at least two groups of press head assemblies 100 as described above, the structure of the welding press head tool 200 can be more compact.

Fig. 7 is a cross-sectional view of a welding press head tool 200 according to an embodiment of the present application. Fig. 7 is a schematic diagram of the welding press head tool 200 cut along a YZ plane.

In some embodiments of the present application, referring to Fig. 7, the press head assembly 100 further includes a connecting rod 140, where the connecting rod 140 is movably connected to the press plate 110 in the first direction Z, and an end portion of the connecting rod 140 facing the press head 130 is detachably connected to the press head 130. The press head 130 is connected to the connecting rod 140, and the connecting rod 140 is movably connected to the press plate 110, such that when the connecting rod 140 moves relative to the press plate 110, the press head 130 can be driven to move relative to the press plate 110.

In a specific implementation, the connecting rod 140 may be a bolt, and a threaded end of the connecting rod 140 may be threadedly connected to the press head 130.

The press plate 110 may be provided with a guide hole 111 for the connecting rod 140 to penetrate, and the threaded end of the connecting rod 140 passes through the guide hole 111 from the side of the press plate 110 facing away from the press head 130 and is then threadedly connected to the press head 130. The connecting rod 140 and the guide hole 111 may be guide-fitted. The side of the guide hole 111 facing away from the press head 130 may be provided with a counter bored hole 1111, so that a head portion of the bolt may be located in the counter bored hole 1111 and a bottom wall portion of the counter bored hole 1111 may limit the head portion of the bolt.

In addition, in an embodiment of the present application, an elastic member 141 is further arranged between the press plate 110 and the press head 130, and the elastic member 141 is used to apply to the press head 130 an elastic force facing away from the press plate 110. Thus, when pressure is applied to an external apparatus press plate 110, the pressure can be applied to the press head 130 by means of the elastic member 141, and when there is fluctuation in a size of a component 330 to be welded, such fluctuation can be offset, so that the force applied by the press head 130 to the component 330 to be welded is a set value.

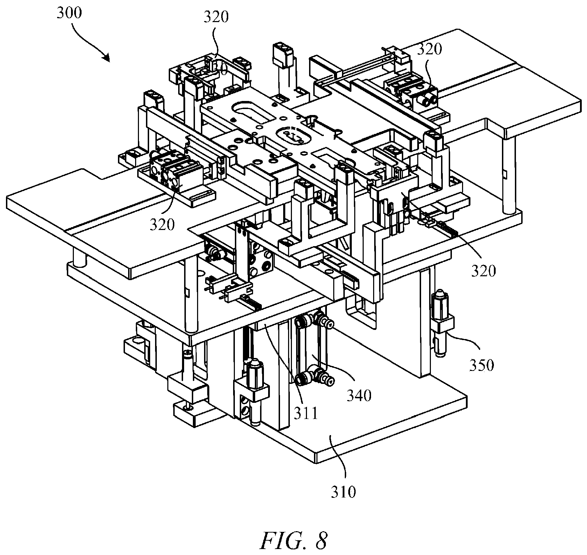

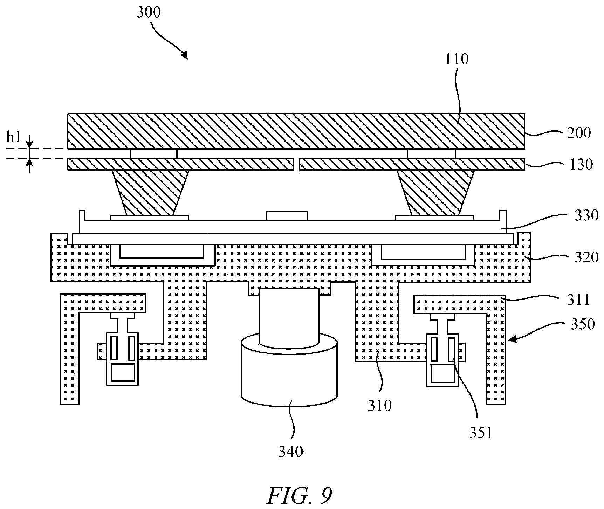

Fig. 8 is a schematic structural diagram of a welding device according to an embodiment of the present application, and Fig. 9 is a schematic diagram of an operating principle of a welding device according to an embodiment of the present application. It should be noted that in Fig. 8, a structure of the welding press head tool 200 is not shown.

Referring to Figs. 8 and 9, some embodiments of the present application further provide a welding device 300. The welding device 300 includes a welding press head tool 200 in the foregoing embodiments. It can be understood that the structure, function, operating principle, etc. of the welding press head tool 200 have been described in detail in the foregoing embodiments and will not be described in detail herein.

In some embodiments of the present application, the welding device 300 further includes: a rack 310, a welding press head tool 200 being connected to the rack 310;
a clamp 320 that is used for clamping and fixing a component 330 to be welded and is arranged opposite to the welding press head tool 200;
a jacking mechanism 340 arranged on the rack 310, the jacking mechanism 340 being connected to the clamp 320 and used for driving the component 330 to be welded on the clamp 320 to move in an opposite direction of the welding press head tool 200 and the clamp 320;
a limiting mechanism 350 arranged on the rack 310, the limiting mechanism 350 being used for limiting, when the clamp 320 is located in a first preset position relative to the welding press head tool 200, a displacement of the clamp 320 toward the welding press head tool 200.

In a welding device of the related art, a component to be welded is clamped on a clamp, and a jacking mechanism is used for driving the clamp to move in a direction close to a welding press head, and after the clamp moves to a predetermined position, the welding press head presses against the component to be welded until the component to be welded is pressed between the welding press head and the clamp, and then a welding operation is performed. In this solution, there is often a problem that the welding quality of the component to be welded is not qualified due to instability of a clamping force of the welding press head and the clamp acting on the component to be welded.

In the above-described solution, a lower reference position of a welding operation is limited by arranging a limiting mechanism 350, so as to eliminate the instability of such a clamping force. Specifically, the limiting mechanism 350 is used for limiting, when the clamp 320 is located in the first preset position relative to the welding press head tool 200, the displacement of the clamp 320 toward the welding press head tool 200, namely, the jacking mechanism 340 can drive the clamp 320 to reach the same position each time, in other words, during welding each time, the component 330 to be welded on the welding clamp 320 can be located in the same position in a height direction. In this way, the component 330 to be welded has the same position lower reference in different welding processes, so that the problem can be solved that the clamping force is unstable due to fluctuations in the relative positions of the welding press head 130 and the clamp 320, and the welding quality is improved.

The clamp 320 can position the component 330 to be welded in four directions extending along a horizontal plane, and can also position a center spacing of the component 330 to be welded.

The jacking mechanism 340 may be a component capable of generating a linear displacement, such as a jacking cylinder. A cylinder body of the jacking cylinder may be connected to the rack 310, and a piston of the jacking cylinder may be connected to the clamp 320 and drive the clamp 320 to move toward the welding press head 130. In addition, the first preset position herein may be determined according to actual needs.

In some embodiments of the present application, the limiting mechanism 350 includes a moving member 351 and a limiting baffle 311, where the moving member 351 is connected to the clamp 320; the limiting baffle 311 is arranged on the rack 310, and the limiting baffle 311 is located on a movement path of the moving member 351; and
when the moving member 351 moves to abut against the limiting baffle 311 under the drive of the clamp 320, the clamp 320 is located in the first preset position (the position as shown in Fig. 9) relative to the welding press head tool 200.

In the above-described solution, the moving member 351 can be in linkage with the clamp 320, and a position of the moving member 351 is limited by means of the limiting baffle 311, so that the position of the clamp 320 is limited. The structure is simple and easy to operate.

In the embodiment of the present application, with reference to Figs. 7 and 9, as described above, the elastic member 141 is arranged between the press plate 110 and the press head 130, and the elastic member 141 is used for applying to the press head 130 an elastic force facing away from the press plate 110. During the actual welding, the size of the component 330 to be welded that is pressed between the welding press head 130 and the clamp 320 may fluctuate, which may also cause variation in the pressing force applied to the component 330 to be welded, resulting in instability of the welding quality and an increase in the probability of defective products.

Also, by arranging the elastic member 141 between the press plate 110 and the press head 130, the elastic force applied by the press plate 110 is transferred to the press head 130 by means of the elastic member 141 and transferred to the component 330 to be welded, and the elastic member 141 elastically deforms in the opposite direction of the press plate 110 and the press head 130, so that the fluctuation of the size of the component 330 to be welded can be offset. Also, the welding press head assembly 100 can be prevented from crushing the component 330 to be welded.

In an embodiment of the present application, as shown in Fig. 9, the gap h1 between the press plate 110 and the press head 130 is greater than or equal to 2 mm. In an actual welding process, the applicant of the present application found after research that the dimensional chain tolerance of the component 330 to be welded is less than 2 mm, so long as the gap h1 between the press plate 110 and the press head 130 (the gap between the press plate 110 and the press head 130 when the press head 130 does not abut against the component 330 to be welded) is greater than or equal to 2 mm, and the elastic member 141 can be allowed to offset the dimensional chain tolerance of the component 330 to be welded. Even for different tolerances of components 330 to be welded, the component 330 to be welded can be subjected to the same pressure.

In an embodiment of the present application, the elastic member 141 may have an elastic coefficient of 5.9 N/mm. In combination with the above-mentioned gap h1 between the press plate 110 and the press head 130 being greater than or equal to 2 mm, it is possible to control the pressing force of the welding press head tool 200 acting on the component to be welded to be less than or equal to 150 N. Furthermore, the elastic member 141 may be a spring.

The foregoing embodiments merely illustrate several implementations of the present application, and the description thereof is relatively specific and detailed. It should be pointed out that those of ordinary skill in the art may also make several variations and improvements without departing from the concept of the present invention as defined by the appended claims.

## Claims

1. A welding press head tool comprising at least one press head assembly (100), each press head assembly (100) comprising:
a press plate (110) provided with a first through hole (120) penetrating the press plate (110) in a first direction;
a press head (130) movably connected to one side of the press plate (110) in the first direction and capable of having a first gap (101) with the press plate (110) when the press head moves relative to the press plate (110), the press head (130) having a second through hole (150) penetrating the press head (130) in the first direction, and the first through hole (120) and the second through hole (150) being in communication to jointly define a welding channel (170) for providing a welding space; and
at least two groups of blocking assemblies (160) arranged between the press plate (110) and the press head (130), each of the blocking assemblies (160) being used for blocking a channel formed by the first gap (101) in a second direction perpendicular to the first direction, and at least two groups of the blocking assemblies (160) in all the blocking assemblies (160) being arranged spaced apart in a radial direction of the welding channel (170) and having overlapping portions in a circumferential direction of the welding channel (170);
wherein each of the blocking assemblies (160) comprises a blocking bar (161), and the blocking bar (161) is arranged on one of the press plate (110) and the press head (130) and extends out toward the other;
**characterized in that** among the blocking assemblies (160) arranged spaced apart in the radial direction of the welding channel (170) and having the overlapping portions in the circumferential direction of the welding channel (170), at least one group of the blocking assemblies (160) is located at an outer contour edge of the press head (130), and at least one group of the blocking assemblies (160) is located between the outer contour edge of the press head (130) and an orifice edge (151) of the second through hole (150);and
wherein that the blocking assemblies (160) further comprise an insert groove (162) arranged corresponding to the blocking bar (161) and used for inserting the blocking bar (161);
if the blocking bar (161) is arranged on the press plate (110), the insert groove (162) is formed in the press head (130); and
if the blocking bar (161) is arranged on the press head (130), the insert groove (162) is formed in the press plate (110).

2. The welding press head tool according to claim 1, **characterized in that**
in the same blocking assemblies (160), the blocking bar (161) is arranged on a surface of the press head (130) facing the press plate (110), and the insert groove (162) is formed in a surface of the press plate (110) facing the press head (130); or,
in the blocking assembly (160) located at the outer contour edge of the press head (130), a hooking portion (1611) is arranged at an extension end of the blocking bar (161), and a limiting portion (1621) is arranged at a rabbet of the insert groove (162) corresponding to the hooking portion (1611); and
the hooking portion (1611) extends into the insert groove (162),
and the hooking portion (1611) is used for being hooked on the limiting portion (1621) when the blocking bar (161) moves away from the insert groove (162).

3. The welding press head tool according to claim 1, **characterized in that** among the blocking assemblies (160) arranged spaced apart in the radial direction of the welding channel (170) and having the overlapping portions in the circumferential direction of the welding channel (170), at least one group of the blocking assemblies (160) is located at the orifice edge of the second through hole (150).

4. The welding press head tool according to claim 3, **characterized in that** in the blocking assembly (160) located at the orifice edge of the second through hole (150), the blocking bar (161) is arranged on the press head (130) and extends out to an inner side of an inner wall of the first through hole (120).

5. The welding press head tool according to claim 4, **characterized in that** a first recess (181) and a second recess (182) are respectively formed in surfaces of the press plate (110) and the press head (130) opposite to each other, the first recess (181) is in communication with the first through hole (120), the second recess (182) is in communication with the second through hole (150), the first recess (181) and the second recess (182) correspond to each other in position and jointly define a dust removal channel (180) in communication with the outside of the press head assembly (100), and in the blocking assembly (160) located at the orifice edge of the second through hole (150), part of a structure of the blocking bar (161) extends into an inner side of an inner wall of the first recess (181) and extends in an axial direction of the dust removal channel (180).

6. The welding press head tool according to claim 5, **characterized in that** a third recess (191) and a fourth recess (192) are respectively formed in surfaces of the press plate (110) and the press head (130) opposite to each other, the third recess (191) is in communication with the first through hole (120), the fourth recess (192) is in communication with the second through hole (150), the third recess (191) and the fourth recess (192) correspond to each other in position and jointly define a gas intake channel (190) in communication with the outside of the press head assembly (100), and in the blocking assembly (160) at the orifice edge of the second through hole (150), the blocking bar (161) extends into an inner side of an inner wall of the third recess (191) and extends in an axial direction of the gas intake channel (190).

7. The welding press head tool according to any one of claims 1 to 6, **characterized in that** six groups of the blocking assemblies (160) are provided, wherein three groups of the blocking assemblies (160) are located on a first side of the welding channel (170), are arranged spaced apart in the radial direction of the welding channel (170), and have overlapping portions in the circumferential direction of the welding channel (170);
the other three groups of the blocking assemblies (160) are located on a second side of the welding channel (170), are arranged spaced apart in the radial direction of the welding channel (170), and have overlapping portions in the circumferential direction of the welding channel (170);
wherein the first side and the second side are opposite sides of the welding channel (170) in the radial direction thereof.

8. The welding press head tool according to claim 7, **characterized in that** the blocking bar (161) in each of the blocking assemblies (160) extends in a second direction;
wherein the second direction is perpendicular to a direction from the first side to the second side and perpendicular to the first direction.

9. The welding press head tool according to any one of claims 1 to 7, **characterized in that**
at least two groups of the press head assemblies (100) are provided, and the press plates (110) in the at least two groups of press head assemblies (100) are interconnected or integrally formed; and
the press heads (130) in the at least two groups of the press head assemblies (100) are located on the same side of the corresponding press plate (110) and are spaced apart from each other;
or,
the press head assembly (100) further includes a connecting rod (140), and the connecting rod (140) is movably connected to the press plate (110) in the first direction, and an end portion of the connecting rod (140) facing the press head (130) is detachably connected to the press head (130).

10. A welding device, **characterized by** comprising a welding press head tool of any one of claims 1 to 9.

11. The welding device according to claim 10, **characterized in that** the welding device (300) further comprises:
a rack (310), the welding press head tool being connected to the rack (310);
a clamp (320) for clamping and fixing a component (330) to be welded, and arranged opposite to the welding press head tool;
a jacking mechanism (340) arranged on the rack (310), the jacking mechanism (340) being connected to the clamp (320) and used for driving the component (330) to be welded on the clamp (320) to move in an opposite direction of the welding press head tool and the clamp (320); and
a limiting mechanism (350) arranged on the rack (310), the limiting mechanism (350) being used for limiting, when the clamp (320) is located at a first preset position relative to the welding press head tool, a displacement of the clamp (320) toward the welding press head tool; and preferably,
the limiting mechanism (350) comprises a moving member (351) and a limiting baffle (311), wherein the moving member (351) is connected to the clamp (320);
the limiting baffle (311) is connected to the rack (310), and the limiting baffle (311) is located on a movement path of the moving member (351); and
when the moving member (351) moves to abut against the limiting baffle (311) under the drive of the clamp (320), the clamp (320) is located in the first preset position relative to the welding press head tool.

12. The welding device according to any one of claims 10 to 11, **characterized in that** the press plate (110) and the press head (130) are movably connected by means of the connecting rod (140), an elastic member (141) is arranged between the press plate (110) and the press head (130), and the elastic member (141) is used for applying to the press head (130) an elastic force facing away from the press plate (110); and
a first gap (101) between the press plate (110) and the press head (130) is greater than or equal to 2 mm; and preferably,
the elastic member (141) has an elastic coefficient of 5.9 N/mm.

## Patentansprüche

1. Schweißpresskopfwerkzeug, das mindestens eine Presskopfanordnung (100) umfasst, wobei jede Presskopfanordnung (100) Folgendes umfasst:
eine Pressplatte (110), die mit einem ersten Durchgangsloch (120) versehen ist, das die Pressplatte (110) in einer ersten Richtung durchdringt;
einen Presskopf (130), der bewegbar mit einer Seite der Pressplatte (110) in der ersten Richtung verbunden ist und einen ersten Spalt (101) mit der Pressplatte (110) aufweisen kann, wenn sich der Presskopf relativ zu der Pressplatte (110) bewegt, wobei der Presskopf (130) ein zweites Durchgangsloch (150) aufweist, das den Presskopf (130) in der ersten Richtung durchdringt, und wobei das erste Durchgangsloch (120) und das zweite Durchgangsloch (150) in Kommunikation stehen, um gemeinsam einen Schweißkanal (170) zum Bereitstellen eines Schweißraums zu definieren; und
mindestens zwei Gruppen von Blockieranordnungen (160), die zwischen der Pressplatte (110) und dem Presskopf (130) angeordnet sind, wobei jede der Blockieranordnungen (160) zum Blockieren eines Kanals verwendet wird, der durch den ersten Spalt (101) in einer zweiten Richtung senkrecht zu der ersten Richtung gebildet wird, und wobei mindestens zwei Gruppen der Blockieranordnungen (160) in allen Blockieranordnungen (160) in einer radialen Richtung des Schweißkanals (170) beabstandet angeordnet sind und überlappende Abschnitte in einer umlaufenden Richtung des Schweißkanals (170) aufweisen;
wobei jede der Blockieranordnungen (160) eine Blockierleiste (161) umfasst und die Blockierleiste (161) an einem aus der Pressplatte (110) und dem Presskopf (130) angeordnet ist und sich zu dem anderen hin erstreckt;
**dadurch gekennzeichnet, dass** unter den Blockieranordnungen (160), die in radialer Richtung des Schweißkanals (170) beabstandet angeordnet sind und die überlappenden Abschnitte in umlaufender Richtung des Schweißkanals (170) aufweisen, mindestens eine Gruppe der Blockieranordnungen (160) an einer Außenkonturkante des Presskopfes (130) angeordnet ist, und sich mindestens eine Gruppe der Blockieranordnungen (160) zwischen der Außenkonturkante des Presskopfes (130) und einem Mündungsrand (151) des zweiten Durchgangslochs (150) befindet; und
wobei die Blockieranordnungen (160) ferner eine Einsatznut (162) umfassen, die entsprechend der Blockierleiste (161) angeordnet ist und zum Einsetzen der Blockierleiste (161) verwendet wird;
wobei, wenn die Blockierleiste (161) an der Pressplatte (110) angeordnet ist, die Einsatznut (162) im Presskopf (130) gebildet ist; und
wobei, wenn die Blockierleiste (161) am Presskopf (130) angeordnet ist, die Einsatznut (162) in der Pressplatte (110) gebildet ist.

2. Schweißpresskopfwerkzeug nach Anspruch 1, **dadurch gekennzeichnet, dass**
bei den gleichen Blockieranordnungen (160) die Blockierleiste (161) auf einer der Pressplatte (110) zugewandten Fläche des Presskopfes (130) angeordnet ist und die Einsatznut (162) in einer dem Presskopf (130) zugewandten Fläche der Pressplatte (110) gebildet ist; oder
bei der am Außenkonturrand des Presskopfes (130) befindlichen Blockieranordnung (160) ein Einhakabschnitt (1611) an einem Ausdehnungsende der Blockierleiste (161) gebildet ist und ein Begrenzungsabschnitt (1621) an einem dem Einhakabschnitt (1611) entsprechenden Anschlag der Einsatznut (162) angeordnet ist; und
sich der Einhakabschnitt (1611) in die Einsatznut (162) erstreckt,
und der Einhakabschnitt (1611) dazu dient, an dem Begrenzungsabschnitt (1621) eingehakt zu werden, wenn sich die Blockierleiste (161) von der Einsatznut (162) weg bewegt.

3. Schweißpresskopfwerkzeug nach Anspruch 1, **dadurch gekennzeichnet, dass** unter den in radialer Richtung des Schweißkanals (170) beabstandet angeordneten Blockieranordnungen (160) mit den Überlappungsabschnitten in umlaufender Richtung des Schweißkanals (170) mindestens eine Gruppe der Blockieranordnungen (160) am Mündungsrand des zweiten Durchgangslochs (150) angeordnet ist.

4. Schweißpresskopfwerkzeug nach Anspruch 3, **dadurch gekennzeichnet, dass** bei der am Mündungsrand der zweiten Durchgangsbohrung (150) befindlichen Blockieranordnung (160) die Blockierleiste (161) am Presskopf (130) angeordnet ist und sich bis zu einer Innenseite einer Innenwand der ersten Durchgangsbohrung (120) erstreckt.

5. Schweißpresskopfwerkzeug nach Anspruch 4, **dadurch gekennzeichnet, dass** eine erste Ausnehmung (181) und eine zweite Ausnehmung (182) jeweils in einander gegenüberliegenden Oberflächen der Pressplatte (110) und des Presskopfes (130) ausgebildet sind, die erste Ausnehmung (181) mit dem ersten Durchgangsloch (120) in Verbindung steht, die zweite Ausnehmung (182) mit dem zweiten Durchgangsloch (150) in Verbindung steht, die erste Ausnehmung (181) und die zweite Ausnehmung (182) einander in ihrer Position entsprechen und gemeinsam einen Staubentfernungskanal (180) definieren, der mit der Außenseite der Presskopfanordnung (100) in Verbindung steht, und dass sich in der am Mündungsrand des zweiten Durchgangslochs (150) angeordneten Blockieranordnung (160) ein Teil einer Struktur der Blockierleiste (161) in eine Innenseite einer Innenwand der ersten Ausnehmung (181) erstreckt und sich in einer axialen Richtung des Staubentfernungskanals (180) erstreckt.

6. Schweißpresskopfwerkzeug nach Anspruch 5, **dadurch gekennzeichnet, dass** eine dritte Ausnehmung (191) und eine vierte Ausnehmung (192) jeweils in einander gegenüberliegenden Oberflächen der Pressplatte (110) und des Presskopfes (130) ausgebildet sind, die dritte Ausnehmung (191) mit dem ersten Durchgangsloch (120) in Verbindung steht, die vierte Ausnehmung (192) mit dem zweiten Durchgangsloch (150) in Verbindung steht, die dritte Ausnehmung (191) und die vierte Ausnehmung (192) einander in ihrer Lage entsprechen und gemeinsam einen Gaseintrittskanal (190) definieren, der mit der Außenseite der Presskopfanordnung (100) in Verbindung steht, und dass sich in der Blockieranordnung (160) am Mündungsrand der zweiten Durchgangsbohrung (150) die Blockierleiste (161) in eine Innenseite einer Innenwand der dritten Ausnehmung (191) erstreckt und sich in axialer Richtung des Gaseintrittskanals (190) erstreckt.

7. Schweißpresskopfwerkzeug nach einem der Ansprüche 1 bis 6, **dadurch gekennzeichnet, dass** sechs Gruppen der Blockieranordnungen (160) bereitgestellt sind, wobei drei Gruppen der Blockieranordnungen (160) auf einer ersten Seite des Schweißkanals (170) befindlich sind, in radialer Richtung des Schweißkanals (170) beabstandet angeordnet sind und in umlaufender Richtung des Schweißkanals (170) überlappende Abschnitte aufweisen;
die anderen drei Gruppen der Blockieranordnungen (160) auf einer zweiten Seite des Schweißkanals (170) befindlich sind, in radialer Richtung des Schweißkanals (170) beabstandet angeordnet sind und überlappende Abschnitte in umlaufender Richtung des Schweißkanals (170) aufweisen;
wobei die erste Seite und die zweite Seite gegenüberliegende Seiten des Schweißkanals (170) in der radialen Richtung davon sind.

8. Schweißpresskopfwerkzeug nach Anspruch 7, **dadurch gekennzeichnet, dass** sich die Blockierleiste (161) in jeder der Blockieranordnungen (160) in einer zweiten Richtung erstreckt; wobei die zweite Richtung senkrecht zu einer Richtung von der ersten Seite zu der zweiten Seite und senkrecht zu der ersten Richtung ist.

9. Schweißpresskopfwerkzeug nach einem der Ansprüche 1 bis 7, **dadurch gekennzeichnet, dass**
mindestens zwei Gruppen der Presskopfanordnungen (100) bereitgestellt sind und die Pressplatten (110) in den mindestens zwei Gruppen von Presskopfanordnungen (100) miteinander verbunden oder integral ausgebildet sind; und
sich die Pressköpfe (130) in den mindestens zwei Gruppen der Presskopfanordnungen (100) auf derselben Seite der entsprechenden Pressplatte (110) befinden und voneinander beabstandet sind; oder
die Presskopfanordnung (100) ferner eine Verbindungsstange (140) umfasst, wobei die Verbindungsstange (140) in der ersten Richtung bewegbar mit der Pressplatte (110) verbunden ist und ein dem Presskopf (130) zugewandter Endabschnitt der Verbindungsstange (140) lösbar mit dem Presskopf (130) verbunden ist.

10. Schweißvorrichtung, **dadurch gekennzeichnet, dass** sie ein Schweißpresskopfwerkzeug nach einem der Ansprüche 1 bis 9 umfasst.

11. Schweißvorrichtung nach Anspruch 10, **dadurch gekennzeichnet, dass** die Schweißvorrichtung (300) ferner Folgendes umfasst:
ein Gestell (310), wobei das Schweißpresskopfwerkzeug mit dem Gestell (310) verbunden ist;
eine Klemme (320) zum Einklemmen und Befestigen eines zu verschweißenden Bauteils (330), und angeordnet gegenüber dem Schweißpresskopfwerkzeug;
einen Anhebemechanismus (340), der auf dem Gestell (310) angeordnet ist, wobei der Anhebemechanismus (340) mit der Klemme (320) verbunden ist und zum Antreiben des zu verschweißenden Bauteils (330) an der Klemme (320) verwendet wird, um sich in eine dem Schweißpresskopfwerkzeugs und der Klemme (320) entgegengesetzte Richtung zu bewegen; und
einen Begrenzungsmechanismus (350), der am Gestell (310) angeordnet ist, wobei der Begrenzungsmechanismus (350) verwendet wird, um, wenn sich die Klemme (320) in einer ersten voreingestellten Position relativ zu dem Schweißpresskopfwerkzeug befindet, eine Verschiebung der Klemme (320) in Richtung des Schweißpresskopfwerkzeugs zu begrenzen; und wobei, vorzugsweise,
der Begrenzungsmechanismus (350) ein Bewegungselement (351) und eine Begrenzungsplatte (311) umfasst, wobei das Bewegungselement (351) mit der Klemme (320) verbunden ist;
die Begrenzungsplatte (311) mit dem Gestell (310) verbunden ist und sich die Begrenzungsplatte (311) auf einer Bewegungsbahn des Bewegungselements (351) befindet; und
wobei, wenn sich das Bewegungselement (351) unter dem Antrieb der Klemme (320) bewegt, um an der Begrenzungsplatte (311) anzuliegen, sich die Klemme (320) in der ersten vorgegebenen Position relativ zum Schweißpresskopfwerkzeug befindet.

12. Schweißvorrichtung nach einem der Ansprüche 10 bis 11, **dadurch gekennzeichnet, dass** die Pressplatte (110) und der Presskopf (130) mittels der Verbindungsstange (140) bewegbar verbunden sind, wobei ein elastisches Element (141) zwischen der Pressplatte (110) und dem Presskopf (130) angeordnet ist und das elastische Element (141) zum Aufbringen einer von der Pressplatte (110) abgewandten elastischen Kraft auf den Presskopf (130) dient; und
wobei ein erster Spalt (101) zwischen der Pressplatte (110) und dem Presskopf (130) größer oder gleich 2 mm ist; und wobei, vorzugsweise,
das elastische Element (141) einen elastischen Koeffizienten von 5,9 N/mm aufweist.

## Revendications

1. Outil de tête de pression de soudage comprenant au moins un ensemble tête de pression (100), chaque ensemble tête de pression (100) comprenant :
une plaque de pression (110) munie d'un premier trou traversant (120) pénétrant dans la plaque de pression (110) dans une première direction ;
une tête de pression (130) reliée mobile à un côté de la plaque de pression (110) dans la première direction et pouvant être séparée par un premier intervalle (101) de la plaque de pression (110) lorsque la tête de pression se déplace par rapport à la plaque de pression (110), la tête de pression (130) présentant un second trou traversant (150) pénétrant dans la tête de pression (130) dans la première direction, et le premier trou traversant (120) et le second trou traversant (150) étant en communication pour définir conjointement un canal de soudage (170) pour créer un espace de soudage ; et
au moins deux groupes d'ensembles de blocage (160) disposés entre la plaque de pression (110) et la tête de pression (130), chacun des ensembles de blocage (160) servant à bloquer un canal formé par le premier intervalle (101) dans une seconde direction perpendiculaire à la première direction, et au moins deux groupes des ensembles de blocage (160) parmi tous les ensembles de blocage (160) étant disposés de façon à être mutuellement espacés dans une direction radiale du canal de soudage (170) et présentant des parties superposées dans une direction circonférentielle du canal de soudage (170) ;
chacun des ensembles de blocage (160) comprenant une barre de blocage (161), la barre de blocage (161) étant disposée sur l'une de la plaque de pression (110) et de la tête de pression (130) et s'étendant vers l'autre ;
**caractérisé en ce que** parmi les ensembles de blocage (160) disposés de façon à être mutuellement espacés dans la direction radiale du canal de soudage (170) et présentant les parties superposées dans la direction circonférentielle du canal de soudage (170), au moins un groupe des ensembles de blocage (160) est situé au niveau d'un bord de contour extérieur de la tête de pression (130), et au moins un groupe d'ensembles de blocage (160) est situé entre le bord de contour extérieur de la tête de pression (130) et un bord d'orifice (151) du second trou traversant (150) ; et
les ensembles de blocage (160) comprenant, en outre, une rainure d'insertion (162) disposée en correspondance avec la barre de blocage (161) et servant à l'insertion de la barre de blocage (161) ;
la rainure d'insertion (162) étant formée dans la tête de pression (130) si la barre de blocage (161) est disposée sur la plaque de pression (110) ; et
la rainure d'insertion (162) étant formée dans la plaque de pression (110) si la barre de blocage (161) est disposée sur la tête de pression (130).

2. Outil de tête de pression de soudage selon la revendication 1, **caractérisé en ce que**
dans les mêmes ensembles de blocage (160), la barre de blocage (161) est disposée sur une surface de la tête de pression (130) faisant face à la plaque de pression (110), et la rainure d'insertion (162) est formée dans une surface de la plaque de pression (110) faisant face à la tête de pression (130) ; ou
dans l'ensemble de blocage (160) situé au niveau du bord de contour extérieur de la tête de pression (130), une partie d'accrochage (1611) est disposée à une extrémité d'extension de la barre de blocage (161), et une partie de limitation (1621) est disposée au niveau d'une entaille de la rainure d'insertion (162) correspondant à la partie d'accrochage (1611) ; et
la partie d'accrochage (1611) s'étend dans la rainure d'insertion (162),
et la partie d'accrochage (1611) est utilisée de sorte qu'elle s'accroche sur la partie de limitation (1621) lorsque la barre de blocage (161) s'éloigne de la rainure d'insertion (162).

3. Outil de tête de pression de soudage selon la revendication 1, **caractérisé en ce que**, parmi les ensembles de blocage (160) disposés de façon à être mutuellement espacés dans la direction radiale du canal de soudage (170) et présentant les parties superposées dans la direction circonférentielle du canal de soudage (170), au moins un groupe des ensembles de blocage (160) est situé au niveau du bord d'orifice du second trou traversant (150).

4. Outil de tête de pression de soudage selon la revendication 3, **caractérisé en ce que**, dans l'ensemble de blocage (160) situé au niveau du bord d'orifice du second trou traversant (150), la barre de blocage (161) est disposée sur la tête de pression (130) et s'étend vers un côté intérieur d'une paroi intérieure du premier trou traversant (120).

5. Outil de tête de pression de soudage selon la revendication 4, **caractérisé en ce qu'**un premier renfoncement (181) et un deuxième renfoncement (182) sont respectivement formés dans des surfaces opposées l'une à l'autre de la plaque de pression (110) et de la tête de pression (130), le premier renfoncement (181) est en communication avec le premier trou traversant (120), le deuxième renfoncement (182) est en communication avec le second trou traversant (150), le premier renfoncement (181) et le deuxième renfoncement (182) se correspondent en position et définissent conjointement un canal d'évacuation de poussière (180) en communication avec l'extérieur de l'ensemble tête de pression (100) et, dans l'ensemble de blocage (160) situé au niveau du bord d'orifice du second trou traversant (150), une partie d'une structure de la barre de blocage (161) s'étend dans un côté intérieur d'une paroi intérieure du premier renfoncement (181) et s'étend dans une direction axiale du canal d'évacuation de poussière (180).

6. Outil de tête de pression de soudage selon la revendication 5, **caractérisé en ce qu'**un troisième renfoncement (191) et un quatrième renfoncement (192) sont respectivement formés dans des surfaces opposées l'une à l'autre de la plaque de pression (110) et de la tête de pression (130), le troisième renfoncement (191) est en communication avec le premier trou traversant (120), le quatrième renfoncement (192) est en communication avec le second trou traversant (150), le troisième renfoncement (191) et le quatrième renfoncement (192) se correspondent en position et définissent conjointement un canal d'admission de gaz (190) en communication avec l'extérieur de l'ensemble tête de pression (100) et, dans l'ensemble de blocage (160) situé au niveau du bord d'orifice du second trou traversant (150), la barre de blocage (161) s'étend dans un côté intérieur d'une paroi intérieure du troisième renfoncement (191) et s'étend dans une direction axiale du canal d'admission de gaz (190).

7. Outil de tête de pression de soudage selon l'une quelconque des revendications 1 à 6, **caractérisé en ce que** six groupes des ensembles de blocage (160) sont prévus, trois groupes des ensembles de blocage (160) étant disposés sur un premier côté du canal de soudage (170), étant mutuellement espacés dans la direction radiale du canal de soudage (170) et présentant des parties superposées dans la direction circonférentielle du canal de soudage (170) ;
les trois autres groupes des ensembles de blocage (160) étant situés sur un second côté du canal de soudage (170), étant mutuellement espacés dans la direction radiale du canal de soudage (170) et présentant des parties superposées dans la direction circonférentielle du canal de soudage (170) ; le premier côté et le second côté étant des côtés opposés du canal de soudage (170) dans la direction radiale de celui-ci.

8. Outil de tête de pression de soudage selon la revendication 7, **caractérisé en ce que** la barre de blocage (161) s'étend dans chacun des ensembles de blocage (160) dans une seconde direction ; la seconde direction étant perpendiculaire à une direction allant du premier côté au second côté et perpendiculaire à la première direction.

9. Outil de tête de pression de soudage selon l'une quelconque des revendications 1 à 7, **caractérisé en ce que**
au moins deux groupes des ensembles têtes de pression (100) sont prévus, et les plaques de pression (110) dans les au moins deux groupes d'ensembles têtes de pression (100) sont mutuellement raccordées ou formées d'un seul tenant ; et
les têtes de pression (130) dans les au moins deux groupes des ensembles têtes de pression (100) sont situées du même côté de la plaque de pression (110) correspondante et sont espacées l'une de l'autre ;
ou
l'ensemble tête de pression (100) comprend en outre une tige de liaison (140), la tige de liaison (140) étant reliée mobile à la plaque de pression (110) dans la première direction, et une partie d'extrémité de la tige de liaison (140) faisant face à la tête de pression (130) étant reliée amovible à la tête de pression (130).

10. Dispositif de soudage, **caractérisé en ce qu'**il comprend un outil de tête de pression de soudage selon l'une quelconque des revendications 1 à 9.

11. Dispositif de soudage selon la revendication 10, **caractérisé en ce que** le dispositif de soudage (300) comporte en outre :
un support (310), l'outil de tête de pression de soudage étant raccordé au support (310) ;
un élément de serrage (320) pour serrer et fixer une pièce (330) à souder, disposé en regard de l'outil de tête de pression de soudage ;
un mécanisme de levage (340) disposé sur le support (310), le mécanisme de levage (340) étant relié à l'élément de serrage (320) et utilisé pour entraîner la pièce (330) à souder se trouvant sur l'élément de serrage (320) de façon à la déplacer dans une direction en opposition à l'outil de tête de pression de soudage et à l'élément de serrage (320) ; et
un mécanisme de limitation (350) disposé sur le support (310), le mécanisme de limitation (350) étant utilisé pour limiter, lorsque l'élément de serrage (320) se trouve dans une première position prédéfinie par rapport à l'outil de tête de pression de soudage, un déplacement de l'élément de serrage (320) vers l'outil de tête de pression de soudage ; et de préférence,
le mécanisme de limitation (350) comprenant un élément mobile (351) et une cloison de limitation (311), l'élément mobile (351) étant relié à l'élément de serrage (320) ;
la cloison de limitation (311) étant reliée au support (310), et la cloison de limitation (311) étant située sur un chemin de déplacement de l'élément mobile (351) ; et
l'élément de serrage (320) se trouvant, lorsque l'élément mobile (351) vient buter contre la cloison de limitation (311) sous l'entraînement de l'élément de serrage (320), dans la première position prédéfinie par rapport à l'outil de tête de pression de soudage.

12. Dispositif de soudage selon l'une quelconque des revendications 10 et 11, **caractérisé en ce que** la plaque de pression (110) et la tête de pression (130) sont reliées de manière mobile au moyen de la tige de liaison (140), un élément élastique (141) est disposé entre la plaque de pression (110) et la tête de pression (130) et l'élément élastique (141) est utilisé pour appliquer sur la tête de pression (130) une force élastique à l'opposé de la plaque de pression (110) ; et
un premier intervalle (101) entre la plaque de pression (110) et la tête de pression (130) est supérieur ou égal à 2 mm ; et de préférence,
l'élément élastique (141) a un coefficient d'élasticité de 5,9 N/mm.
